# EUROPEAN PATENT SPECIFICATION

(11) **EP 2 626 390 B1**
(45) Date of publication and mention of the grant of the patent: **18.12.2019**
(21) Application number: 12198182.3
(22) Date of filing: 19.12.2012
(51) Int. Cl.: C09D 11/00, B41J 2/01, B41M 7/00, C09D 11/10, B41M 5/00, C09D 133/08, C09D 163/00

(54) **Ink composition and image forming method**
Tintenzusammensetzung und Bilderzeugungsverfahren
Composition d'encre et procédé de formation d'images

(30) Priority: 13.02.2012 JP 2012028925
(43) Date of publication of application: 14.08.2013
(73) Proprietor: Fujifilm Corporation, Minato-ku Tokyo (JP)
(72) Inventor: Fukagawa, Reiko, Ashigarakami-gun, Kanagawa (JP)
(74) Representative: Klunker IP Patentanwälte PartG mbB

(56) References cited:
- JP-A- 2001 262 022
- US-A1- 2006 205 870

## Description

### BACKGROUND OF THE INVENTION

### Field of Invention

The present invention relates to an inkjet ink composition as defined in claims 1 to 9 and an image forming method as defined in claims 10 to 12 using the ink composition.

### Description of the Related Art

Recently, in order to raise the bar in terms of natural resource protection, environmental conservation, improvement of working stability, and the like, aqueous paints and aqueous inks have been developed. The qualities demanded for aqueous paints and aqueous inks include, as demanded for oil paints and oil inks, fluidity, storage stability, coating film glossiness, sharpness, and coloration strength. In order to enhance the color reproducibility of an image formed from ink, fine particles of a polymer compound have been often added to aqueous ink. For example, an ink set for inkjet recording including fine particles of a polymer compound and a water insoluble organic compound has been disclosed (for example, see Japanese Patent Application Laid-Open (JP-A) No. 2008-186416). However, there is a problem in that the image obtained using the ink set disclosed in the literature has insufficient strength and thus has poor rub-off resistance.

In relation to the above, an aqueous ink composition which includes polymer fine particles having a carbonyl group and a hydrazide compound and in which an image with high strength is formed according to a cross-linking reaction between the carbonyl group and the hydrazide compound in conjunction with solvent reduction, to improve rub-off resistance of the ink, has been disclosed (for example, see JP-A No. 2004-149600). However, in the inkjet method, there are cases in which it takes time to re-apply an ink after prior application of the ink, and there is a problem in that when the ink composition is adhered to an area near a nozzle of an inkjet recording device, a cross-linking reaction occurs as time elapses, leading to undesirable hardening. There is also a problem in that the ink is not easily re-dispersed during re-application, as a result of which, nozzle clogging occurs eventually.

### SUMMARY OF THE INVENTION

The present invention has been made in view of the above circumstances and provides an ink composition and an image forming method.

According to a first aspect of the invention, there is provided an inkjet ink composition including:
(a) particles of a polymer compound having at least one reactive functional group selected from the group consisting of an epoxy group, an acetoacetoxy group, a halomethyl group, a carboxylic acid anhydride, an amino group, a hydroxyl group, a phenolic hydroxyl group, and a carboxy group;
(b) a reactive compound having a functional group that reacts with the reactive functional group of the (a) particles of the polymer compound by energy application;
(c) a coloring agent; and
(d) a water-soluble organic solvent.

According to a second aspect of the invention, there is provided an image forming method including:
an ink application process of applying the ink composition according to the first aspcet of the invention onto a recording medium; and
an energy application process of applying energy to the ink composition that has been applied onto the recording medium.

### DETAILED DESCRIPTION OF THE INVENTION

In the present specification, the numerical range described with "to" means a range including the numbers described before and after the "to" as the minimum value and the maximum value, respectively.

Further, the expression "step" or "process" includes not only an independent step or process but also a step or process that cannot be clearly distinguished from other steps or other processes, as long as the desired effect of the interest is achieved.

### [Ink composition]

The ink composition according to the invention is an inkjet ink composition including (a) particles of a polymer compound having at least one reactive functional group selected from the group consisting of an epoxy group, and a carboxy group (hereinbelow, referred to as appropriate as the (a) polymer particles); (b) a reactive compound having a functional group that reacts with the reactive functional group of the (a) particles of the polymer compound by energy application (hereinbelow, referred to as appropriate as the (b) reactive compound); (c) a coloring agent; and (d) a water-soluble organic solvent.

In the invention, a carboxylic acid anhydride indicates a reactive functional group formed from condensation of a divalent carboxy group.

The mechanism of the invention is believed to be as follows, although it remains unclear.

The ink composition of the invention includes the (a) particles of the polymer compound and the (b) reactive compound. At least one reactive functional group of the (a) polymer particles which is selected from the group consisting of an epoxy group, an acetoacetoxy group, a halomethyl group, a carboxylic acid anhydride, an amino group, a hydroxyl group, a phenolic hydroxyl group, and a carboxy group, and a functional group of the (b) reactive compound that reacts with the reactive functional group of the (a) particles of the polymer compound by energy application do not react with each other unless energy is applied even in a case in which the solvent content in the ink composition is reduced, for example. For such reasons, even in a case in which the ink composition is adhered to a nozzle of an inkjet recording device and fixed thereon as time elapses, for example, when the ink composition is supplied again, the fixed substance contacts a solvent included in the ink composition and is quickly re-dissolved or re-dispersed and, therefore, there no need to be concerned about nozzle clogging. Further, as the fixed substance can be quickly removed with a solvent or water, maintenance is also easy. It is also believed that, by energy application, an image formed of the ink composition forms a cross-linked structure by a reaction between the reactive functional group and the functional group as described above, and as a result, rub-off resistance and blocking resistance of the image are significantly improved.

The ink composition used in the invention includes at least the (a) polymer particles in a dispersion state in an aqueous dispersion medium and the (b) reactive compound having a functional group that reacts with the reactive functional group of the (a) particles of the polymer compound by energy application. The (b) reactive compound having a functional group which can react with the reactive functional group of the (a) polymer particles by energy application, which is included in the ink composition used for the invention, may be a low molecular weight compound or a high molecular weight compound, or may be in a solid particle shape.

Further, the ink composition according to the invention is also required to include the (c) coloring agent, and the (d) water soluble organic solvent as a dispersion medium. The ink composition of the invention may also include water as a medium, and may include various liquid or solid compounds as an additive, if necessary, as long as the effect of the invention is not impaired.

Hereinafter, each component used in the invention is described in order.

### <(a) Particles of polymer compound having at least one reactive functional group selected from the group consisting of an epoxy group and a carboxy group>

The ink composition according to the invention includes particles of a polymer compound having the specific reactive group described above. The polymer compound having specific reactive functional group for forming the (a) polymer particles according to the invention is suitably referred to as "(a-I) specific polymer" hereinafter.

The (a-I) specific polymer according to the invention is not specifically limited as long as it has at least one reactive functional group selected from the group consisting of an epoxy group, an acetoacetoxy group, a halomethyl group, a carboxylic acid anhydride, an amino group, a hydroxyl group, a phenolic hydroxyl group, and a carboxy group. The specific polymer may have the reactive functional group at a side chain, a main chain end, or both.

The (a-I) specific polymer may include only one type, or two or more types of the specific functional group. Further, the (a) polymer particles may be particles including a single polymer compound or may be particles including two or more types of polymer compounds. When the polymer particles include two or more types of polymer compounds, the polymer particles may be particles formed from a mixture of two or more types of polymer compounds or may be composite particles including two or more types of polymer compounds.

The reactive functional group of the (a-I) specific polymer for forming the (a) polymer particles according to the present invention is at least one selected from the group consisting of an epoxy group, an acetoacetoxy group, a halomethyl group, a carboxylic acid anhydride, an amino group, a hydroxyl group, a phenolic hydroxyl group, and a carboxy group. Of these, from the viewpoint of good reactivity; and good rub-off resistance and blocking resistance of a formed image, a carboxy group, an epoxy group, and an acetoacetoxy group are preferable.

The reactive functional group may be introduced after synthesizing the polymer or may be introduced by reacting a repeating unit including the reactive functional group with other repeating unit. It is preferable that the reactive functional group is included in the (a-I) specific polymer, in a form of a repeating unit including the reactive functional group, It is also preferable that the (a-I) specific polymer is obtained by polymerization of a monomer having the reactive functional group. Examples of the monomer including at least one selected from the group consisting of an epoxy group, an acetoacetoxy group, a halomethyl group, a carboxylic acid anhydride, an amino group, a hydroxyl group, a phenolic hydroxyl group, and a carboxy group, which is used for forming the (a-I) specific polymer, include the following. Examples of the monomer having an epoxy group include glycidyl methacrylate (GMA). Examples of the monomer having an acetoacetoxy group include 2-acetoacetoxyethyl methacrylate (AAEM). Examples of the monomer having a halomethyl group include 2-chloroethyl (meth)acrylate, 2-bromoethyl (meth)acrylate, 3-chloro-2-hydroxypropyl (meth)acrylate, and 4-chloromethyl styrene (CMS-P), and 2-chloroethyl (meth)acrylate and 4-chloromethyl styrene are particularly preferable. Examples of the carboxylic acid anhydride include maleic acid anhydride. Examples of the monomer having an amino group include 4-vinylpyridine, 2-vinylpyridine, 2-(dimethylamino)ethyl (meth)acrylate, and 2-(diethylamino)ethyl (meth)acrylate, and 4-vinylpyridine and 2-(dimethylamino)ethyl (meth)acrylate are particularly preferable. Examples of the monomer having a hydroxyl group include 2-hydroxyethyl (meth)acrylate (HEMA), 2-hydroxypropyl (meth)acrylate, polypropylene glycol mono(meth)acrylate, and glycerin monomethacrylate, and 2-hydroxypropyl (meth)acrylate is particularly preferable.

Examples of the monomer which produces a phenolic hydroxyl group by hydrolysis after polymerization include 4-acetoxy styrene. Examples of the monomer having a carboxy group include methacrylic acid (MAA), acrylic acid (AA), 2-carboxyethyl (meth)acrylate, 2-methacryloyloxyethyl succinate, 2-methacryloyloxyethyl phthalate, and 4-vinyl benzoic acid, and methacrylic acid (MAA), acrylic acid (AA), and 2-carboxyethyl (meth)acrylate are particularly preferable.

A content ratio of the repeating unit derived from a monomer having the aforementioned reactive functional group is preferably within a range of from 2% by mass to 70% by mass, and more preferably within a range of 5% by mass to 30% by mass, with respect to a total of repeating units with respect to the (a-I) specific polymer..

The presence or absence, or the introduction amount of the above specific reactive functional group in the (a) polymer particle can be determined by a common method such as IR spectroscopy or nuclear magnetic resonance (NMR).

The (a-I) specific polymer is preferably a compound which additionally has a hydrophilic group in a molecule thereof. The (a-I) specific polymer having a hydrophilic group improves dispersion stability of the (a) polymer particles in an aqueous solvent.

As used herein, the hydrophilic group is not specifically limited as long as it is a group having a function of enhancing the hydrophilicity of the (a-I) specific polymer, and it may be a nonionic hydrophilic group or an ionic hydrophilic group such as an anionic or cationic hydrophilic group.

Amount of the hydrophilic group included in the (a-I) specific polymer is not limited and it is suitably selected depending on a type of the hydrophilic group or a molecular weight of the (a-I) specific polymer. However, the hydrophilic group is preferably included in an amount such that the acid number of the (a-I) specific polymer is within a preferable range described below.

### (Repeating unit having hydrophilicity)

When the (a-I) specific polymer according to the invention is a compound which includes the aforementioned hydrophilic group, the hydrophilic group is preferably included in the (a-I) specific polymer, in a form of a repeating unit having a hydrophilic group, from the viewpoints of synthesis compatibility and ease of controlling a content of a hydrophilic group.

One type of repeating unit having hydrophilicity, or two or more types of repeating units having hydrophilicity may be included in the (a-I) specific polymer. The monomer for forming the "repeating unit having hydrophilicity" (hereinafter, also referred to as a "monomer having hydrophilicity") may have a nonionic hydrophilic group or an ionic hydrophilic group such as an anionic or cationic hydrophilic group as described above.

Although the nonionic hydrophilic group is not specifically limited, preferable examples thereof include a hydroxyl group, an amide group (-CONH₂, -CONHR or -CONR₂, in which R represents a substituent group), and a group represented by [-(R¹¹-O)ₙ-R¹²]. The nonionic hydrophilic group is more preferably a hydroxyl group or a group represented by [-(R¹¹-O)ₙ-R¹²].

The substituent group represented by R in the amide group represents, although is not specifically limited, a chain or cyclic alkyl group having 1 to 6 carbon atoms (preferably 1 to 4 carbon atoms).

In the group represented by [-(R¹¹-O)ₙ-R¹²], R¹¹ represents a chain or cyclic alkyl group having 1 to 6 carbon atoms (preferably 1 to 4 carbon atoms) which may have a hydroxyl group, and R¹² represents a hydroxyl group or a hydrogen atom. n represents an integer of from 1 to 6, more preferably from 2 to 6, and particularly preferably from2 to 4.

Specific examples of the monomer for forming the repeating unit including the nonionic hydrophilic group include the following. Specific examples of the monomer having an amide include acrylamide, methacrylamide, and n-isopropylacrylamide.

Specific examples of the monomer having a hydroxyl group include glycerin mono(meth)acrylate, 2-hydroxyethyl (meth)acrylate, and hydroxypropyl (meth)acrylate.

Specific examples of the monomer having a group represented by [-(R¹¹-O)ₙ-R¹²] include polyethylene glycol (meth)acrylate, polypropylene glycol (meth)acrylate, polybutylene glycol (meth)acrylate, methoxypolyethylene glycol (meth)acrylate, ethoxypolyethylene glycol (meth)acrylate, and butoxypolyethylene glycol (meth)acrylate.

Examples of the anionic hydrophilic group include a carboxyl group, a sulfonic acid group, and a phosphoric acid group.

Although the monomer for forming the repeating unit including an anionic hydrophilic group is not specifically limited, the monomer for forming the repeating unit including an anionic hydrophilic group may be the following. Specific examples of the monomer having a carboxyl group as an anionic hydrophilic group include an unsaturated carboxylic acid monomer such as (meth)acrylic acid, carboxyethyl (meth)acrylate, crotonic acid, itaconic acid, maleic acid, fumaric acid, and citraconic acid; and 2-(meth)acryloyloxymethyl succinic acid.

Examples of the monomer having a sulfonic acid group include p-styrene sulfonic acid, 2-acrylamide-2-methylpropane sulfonic acid, 3-sulfopropyl(meth)acrylate ester, and bis-(3-sulfopropyl)-itaconic acid ester.

Examples of the monomer having a phosphoric acid group include vinyl phosphonic acid, (methacryloxyethyl) phosphate, diphenyl-2-acryloyloxyethyl phosphate, diphenyl-2-methacryloyloxyethyl phosphate, and dibutyl-2-acryloyloxyethyl phosphate.

Of these specific examples, a monomer including a carboxyl group as an anionic hydrophilic group is preferable, and a monomer including a repeating unit derived from an acrylic acid or methacrylic acid monomer.

Further, the anionic hydrophilic group may form a salt.

The cationic hydrophilic group is preferably at least one group selected from the group consisting of a tertiary amino group, a nitrogen-containing aromatic group, and an ammonium salt.

Although the tertiary amino group is not specifically limited, examples of the tertiary amino group as a cationic hydrophilic group include a tertiary amino group represented by - NR₂ (R is a substituent group). The substituent groups represented by R of the tertiary amine group may be different from each other, and examples thereof include a linear or branched alkyl group having 1 to 8 carbon atoms (preferably 1 to 4 carbon atoms) and an aryl group having 6 to 20 carbon atoms (preferably, a phenyl group). Further, the cationic hydrophilic group may be a nitrogen-containing aromatic group such as a pyridine ring structure, and the aromatic ring of the nitrogen-containing aromatic group may have a substituent group.

Although the monomer for forming the hydrophilic repeating unit including a cationic hydrophilic group is not specifically limited, specific examples of the monomer for forming the hydrophilic repeating unit including a cationic hydrophilic group include the following. Specific examples of vinyl monomers having tertiary amine include N,N-dimethylaminoethyl (meth)acrylate, N,N-dimethylaminopropyl (meth)acrylate, N,N-diethylaminoethyl (meth)acrylate, N,N-diethylaminopropyl (meth)acrylate, N,N-dimethylaminoethyl (meth)acrylamide, N,N-dimethylaminopropyl (meth)acrylamide, N,N-diethylaminoethyl (meth)acrylamide, N,N-diethylaminopropyl (meth)acrylamide, and vinyl pyrrolidone. Specific examples of the monomer having a nitrogen-containing aromatic group include 2-vinylpyridine, 4-vinylpyridine, 2-methyl-6-vinylpyridine, and 5-ethyl-2-vinylpyridine.

Specific examples of the monomer having an ammonium salt include a quaternary compound of N,N-dimethylaminoethyl (meth)acrylate, a quaternary compound of N,N-diethylaminoethyl (meth)acrylate, and a quaternary compound of N,N-dimethylaminopropyl (meth)acrylate.

Of these, as a monomer for forming a repeating unit including an ionic hydrophilic group, a monomer including an anionic hydrophilic group is preferable, and methacrylic acid is particularly preferable.

A content ratio of the repeating unit having the aforementioned hydrophilic group as a copolymerization component is preferably within a range of from 3% by mass to 50% by mass, and more preferably within a range of from 5% by mass to 25% by mass, with respect to a total of repeating units forming the (a-I) specific polymer.

Further, the hydrophilic group may or may not have a function of the reactive functional group included in the (a-I) specific polymer. For example, when the (a) specific polymer is used in combination with the (b) reactive compound having an amino group, which is a functional group capable of reacting with an epoxy group, in a case in which the (a-I) specific polymer has an epoxy group as a reactive functional group and has a carboxy group as a hydrophilic group, the hydrophilic group does not have a function of the reactive functional group. Meanwhile, in a case in which the reactive functional group included in the (a-I) specific polymer is a hydrophilic functional group, it is not necessary to further include a hydrophilic group other than the reactive functional group.

The acid number of the (a) polymer particles according to the invention is preferably from 30 mgKOH/g to 200 mgKOH/g and particularly preferably from 50 mgKOH/g to 150 mgKOH/g. By having the acid number in this range, dispersion stability the polymer particles is more favorable.

As used herein, the acid number is defined as the mass (mg) of KOH that is required to completely neutralize 1 g of the dispersion agent. The acid number of the (a) polymer particles can be determined by the method described in JIS Standard (JIS K 0070: 1992), and in the present invention, the numbers determined by the method are used.

### (Other repeating units)

In addition to the repeating unit having the reactive functional group and the repeating unit having a hydrophilic group, which is optionally included, the (a-I) specific polymer according to the invention may include "other repeating units" that are different from those described above, as long as the effect of the invention is not impaired. When the (a-I) specific polymer includes other repeating units, an embodiment in which the (a-I) specific polymer includes a repeating unit having the reactive group and other repeating units, but does not include a repeating unit having a hydrophilic group may be possible.

The (a-I) specific polymer may include one kind or two or more kinds of other repeating units.

Other repeating units are not specifically limited as long as the effect of the invention is not impaired. Examples thereof include a repeating unit derived from a commonly used monomer described in "Polymer Handbook, 4th edition, John Wiley & Sons". Hereinafter, the monomer capable of forming those repeating units may be suitably referred to as "other copolymerizable monomers." Specific examples of other copolymerizable monomers include alkyl (meth)acrylates such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, and 2-ethylhexyl (meth)acrylate; aromatic group-containing (meth)acrylates such as benzyl (meth)acrylate and phenoxyethyl (meth)acrylate; styrenes such as styrene, α-methylstyrene, and chloromethylstyrene; dialkylaminoalkyl (meth)acrylates such as N,N-dimethylaminoethyl (meth)acrylate; and (meth)acrylamides such as N-hydroxyalkyl (meth)acrylamides (for example, N-hydroxymethyl (meth)acrylamide, N-hydroxyethyl (meth)acrylamide, and N-hydroxybutyl (meth)acrylamide) and N-alkoxyalkyl (meth)acrylamides (for example, N-methoxymethyl (meth)acrylamide, N-ethoxymethyl (meth)acrylamide, N-(n-, iso)butoxymethyl (meth)acrylamide, N-methoxyethyl (meth)acrylamide, N-ethoxyethyl (meth)acrylamide, and N-(n-, iso)butoxyethyl (meth)acrylamide).

When the (a-I) specific polymer includes other repeating units, a content ratio of the repeating units is preferably in a range of from 0% by mass to 95% by mass, and more preferably in a range of from 0% by mass to 90% by mass, with respect to a total of repeating units forming the (a-I) specific polymer.

A weight average molecular weight of the (a-I) specific polymer is preferably in a range of from 3000 to 1000000, and more preferably in a range of from 6000 to 200000, from the viewpoint of ejection stability of the ink.

As used herein, the weight average molecular weight is calculated by gel permeation chromatography (GPC) in terms of polystyrene.

Examples of methods for producing the (a) polymer particles using the (a-I) specific polymer include a method of forming particles by performing emulsion polymerization during synthesis of the specific polymer, a method of performing suspension polymerization, and a method of phase-transfer emulsification. From the viewpoint of ease of synthesis, the method by emulsion polymerization is preferable.

The particle diameter of the (a) polymer particles according to the invention is preferably in a range of from 100 nm to 300 nm, and particularly preferably in a range of from 130 nm to 270 nm. When the particle diameter is 100 nm or larger, aggregation of the polymer particles in the ink composition is suppressed, and dispersion stability is excellent. When the diameter is 300 nm or smaller, ejection property by inkjet method is improved. The volume average particle diameter of the polymer particles can be calculated by, for example, a dynamic light scattering method. As for the particle diameter of the polymer particles according to the invention, a value calculated by a common method using MICROTRAC UPA EX-150 (trade name, manufactured by Nikkiso Co., Ltd.) is used, and thus the particle diameter of the polymer particles does not necessarily indicate the primary particle diameter.

Hereinafter, examples of the (a) polymer particles that can be used in the invention are illustrated with a type and a content ratio (% by mass) of monomers used for synthesis of the (a-I) specific polymer for forming the (a) polymer particles, a weight average molecular weight (Mw), a reactive functional group of the (a) polymer particles formed, and average particle diameter (nm) of the polymer particles.

| (a) Poly mer particles | Type of monomer for forming the (a-1) specific polymer (content ratio: % by mass) | | | | | | | | | | Mw (*10⁻³) | Reactive functional group | Particle diameter (nm) |
|---|---|---|---|---|---|---|---|---|---|---|---|---|---|
| | a | (Content ratio) | b | (Content ratio) | c | (Content ratio) | d | (Content ratio) | e | (Content ratio) | | | |
| a-1 | GMA | 10 | M-90G | 90 | - | - | - | - | - | - | 123.5 | Epoxy group | 205 |
| a-2 | AAEM | 30 | MMA | 60 | MAA | 10 | - | - | - | - | 97.2 | Acetoacetoxy group | 156 |
| a-3 | EHMA | 50 | MMA | 35 | MAA | 15 | - | - | - | - | 67.3 | Carboxy group | 265 |
| a-4 | St | 25 | MMA | 40 | BuA | 11 | EHA | 11 | MAA | 13 | 198.4 | Carboxy group | 205 |
| a-5 | St | 52 | Maleic acid anhydride | 48 | - | - | - | - | - | - | 220.0 | Acid anhydride | 140 |
| a-6 | BuMA | 85 | 4-Vinylpyridine | 5 | MAA | 10 | - | - | - | - | 368.6 | Amino group | 283 |
| a-7 | BuMA | 82 | HEMA | 10 | MAA | 8 | - | - | - | - | 7.3 | Hydroxyl group | 112 |
| a-8 | EHMA | 75 | CMS-P | 15 | MAA | 10 | - | - | - | - | 142.2 | Halomethyl group | 223 |
| a-9 | 4-Acetoxystyrene | 20 | MMA | 20 | M-90G | 60 | - | - | - | - | 4.0 | Phenolic hydroxyl group | 220 |

Details of the type of the monomer are as follows.
GMA: glycidyl methacrylate
AAEM: 2-acetoacetoxyethyl methacrylate
MAA: methacrylic acid
MMA: methyl methacrylate
St: styrene
EHMA: 2-ethylhexyl methacrylate
BuMA: n-butyl methacrylate
HEMA: 2-hydroxyethyl methacrylate
CMS-P: 4-chloromethylstyrene
M-90G: methoxypolyethylene glycol #400 methacrylate (manufactured by Shin-Nakamura Chemical Co., Ltd, with the structure described below)

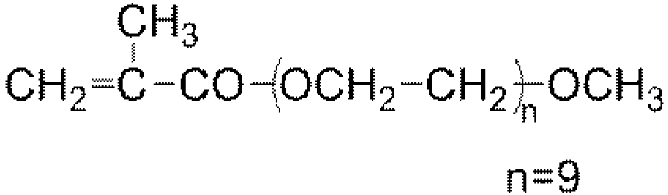

The ink composition of the invention may include one type of the (a) polymer particles, or may include two or more types of the (a) polymer particles. When two or more types of the (a) polymer particles are used in combination, the reactive groups included in the (a) polymer particles may be the same or different from each other. From the viewpoint of storage stability of the ink, the reactive groups included in the (a) polymer particles are preferably the same. The (a) polymer particles which are formed from the same type of the (a-I) specific polymer but have different particle diameter may be used in combination.

A content ratio of the (a) polymer particles in the ink composition is suitably selected depending on the purpose; however, from the viewpoints of ejection stability and strength of an image to be formed, is preferably in a range of from 1% by mass to 20% by mass, and more preferably in a range of from 3% by mass to 15% by mass, with respect to a total amount of the ink composition.

### <(b) Reactive compound having functional group that reacts with the reactive functional group of the (a) particles of the polymer compound by energy application>

The ink composition according to the invention includes (b) a reactive compound having a functional group that reacts with the reactive functional group of the (a) particles of the polymer compound by energy application.

The (b) reactive compound may be a compound having a number average molecular weight of less than 500 or a compound having a number average molecular weight of 500 or more. When the number average molecular weight is less than 500, there is less influence on ink viscosity, and ejection property does not deteriorate, thus it is preferable. When the number average molecular weight is 500 or more, a robust film can be formed even if a small amount of cross-linking reaction between the (a) particles of the polymer compound and the (b) reactive compound occurs, and therefore it is preferable. When the (b) reactive compound has a number average molecular weight of 500 or more and is dispersed in a solid state, since the (b) reactive compound is in a dispersion state, viscosity increase in ink is suppressed, and favorable ejection property is obtained, whereby ink having favorable redispersion property and favorable recovery property after standing is obtained. When the compound has a number average molecular weight of 500 or more, the compound may be included in the ink composition in a state in which the compound is dissolved in the (c) water soluble organic solvent described below. Alternatively, the compound may be included in the ink composition in a solid dispersion state, for example, the compound may be dispersed in a form of solid particles.

The (b) reactive compound may have, in a molecule thereof, two or more of functional groups that react with the reactive functional group of the (a) particles of the polymer compound by energy application. When the (b) reactive compound has two or more functional groups in a molecule thereof, a cross-linking structure with high density is formed by the reaction, whereby rub-off resistance and blocking resistance of a formed ink image are further improved.

The functional group that reacts with the reactive functional group of the (a) particles of the polymer compound by energy application included in the (b) reactive compound is selected in view of the relationship with the reactive functional group of the (a) polymer particles. From the viewpoint of forming a robust coating film by efficient reaction between the (a) polymer particles and the (b) reactive compound, a functional group different from the reactive functional group of the (a) polymer particles is selected. That is, the (b) reactive compound is a compound different from the (a) polymer particles.

When the (b) reactive compound is in the particle form of the polymer compound having the functional group, the (a) polymer particles themselves may be used as the (b) reactive compound. However, it is necessary that the reactive functional group of the (a) polymer particles and the functional group of the (b) reactive compound that react with each other by energy application are different from each other. For such reasons, when the (a) polymer particles having an epoxy group are used, as the (b) reactive compound, polymer particles having a functional group which can react with an epoxy group, for example, the (a) polymer particles having a carboxy group can be used.

Hereinafter, preferred combination of the reactive functional group of the (a) polymer particles and the functional group of the (b) reactive compound, which is selected depending on the reactive functional group of the (a) polymer particles, is described.

When the reactive functional group of the (a) polymer particles is an epoxy group, the (b) reactive compound is preferably a compound having at least one functional group selected from a group consisting of a carboxy group, a hydroxyl group, an amino group, a phenolic hydroxyl group, and a carbonyl group. Of these, a compound having at least one selected from a group consisting of a carboxy group and an amino group is more preferable.

When the reactive functional group of the (a) polymer particles is an acetoacetoxy group, the (b) reactive compound is preferably a compound having at least one functional group selected from a group consisting of an amino group and a hydroxyl group, and a compound having an amino group is more preferable.

When the reactive functional group of the (a) polymer particles is a halomethyl group, the (b) reactive compound is preferably a compound having at least one functional group selected from a group consisting of an amino group, a hydroxyl group, a phenolic hydroxyl group, and a carboxy group, and a compound having an amino group is more preferable.

When the reactive functional group of the (a) polymer particles is a carboxylic acid anhydride, the (b) reactive compound is preferably a compound having at least one functional group selected from a group consisting of an amino group, a hydroxyl group, and a phenolic hydroxyl group, and a compound having an amino group is more preferable.

When the reactive functional group of the (a) polymer particles is an amino group, the (b) reactive compound is preferably a compound having at least one functional group selected from a group consisting of a carboxy group, an epoxy group, a halomethyl group, a carbonyl group, an ester group, and an acetoacetoxy group, and a compound having at least one selected from a group consisting of a carboxy group, an epoxy group, and an acetoacetoxy group is more preferable.

When the reactive functional group of the (a) polymer particles is a hydroxyl group, the (b) reactive compound is preferably an acid halide, or a compound having at least one functional group selected from a group consisting of a carboxy group, an epoxy group, an isocyanate group, a halomethyl group, a carbonyl group, and an ester group, and a compound having an epoxy group is more preferable.

When the reactive functional group of the (a) polymer particles is a phenolic hydroxyl group, the (b) reactive compound is preferably a compound having at least one functional group selected from a group consisting of a carboxy group, an epoxy group, a halomethyl group, a carbonyl group, an ester group, and an acetoacetoxy group, and a compound having an epoxy group is more preferable.

When the reactive functional group of the (a) polymer particles is a carboxy group, the (b) reactive compound is preferably a compound having at least one selected from a group consisting of an amino group, an isocyanate group, and an epoxy group, and a compound having at least one selected from a group consisting of an epoxy group and an amino group is more preferable.

It is preferable that the (a) polymer particles used in the ink composition according to the invention have at least one selected from a group consisting of a carboxy group, an epoxy group, and an acetoacetoxy group, from the viewpoint of forming a robust coating film by efficient reaction between the (a) polymer particles and the (b) reactive compound. For the preferred (a) polymer particles, a compound having at least one selected from a group consisting of a carboxy group, an epoxy group, and an amino group is preferably used as the (b) reactive compound in combination with the (a) polymer particles.

Of these, a combination of the (a) polymer particles having epoxy group and the (b) reactive compound having a carboxy group, or a combination of the (a) polymer particles having carboxy group and the (b) reactive compound having an epoxy group is particularly preferable.

Hereinafter, specific examples of the (b) reactive compound that is used in the ink composition according to the invention are described, but the invention is not limited thereto.

### (Reactive compound having carboxy group)

Examples of the (b) reactive compound having a carboxy group include a low-molecular weight compound having a number average molecular weight of less than 500 and a polymer compound having a number average molecular weight of 500 or more. Preferable examples of the low-molecular weight compound having a number average molecular weight of less than 500 include acetic acid, glycolic acid, malonic acid, malic acid, maleic acid, ascorbic acid, succinic acid, glutaric acid, fumaric acid, citric acid, tartaric acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid, oxalic acid, crotonic acid, itaconic acid, citraconic acid, asparaginic acid, adipic acid, phthalic acid, terephthalic acid, isophthalic acid, isocitric acid, 1,2,3-propane tricarboxylic acid, benzoic acid, hemimellitic acid, trimellitic acid, trimesic acid, mellophanic acid, prehnitic acid, pyromellitic acid, salicylic acid, anisic acid, creatinic phosphoric acid, a derivative thereof, and a salt thereof. Examples of the polymer compound having a number average molecular weight of 500 or more include polyacrylic acid and polymethacrylic acid. The polymer compound having a number average molecular weight of 500 or more may be a commercially available product and examples of the commercially available product include CARBOPOL ULTREZ 20 (trade name, manufactured by NIKKO CHEMICALS CO., LTD.) and ARON NS-1200 (trade name, manufactured by TOAGOSEI CO., LTD.).

When the (b) reactive compound is in a form of polymer particles having a carboxy group, a preferred example may be, for example, particles having an average particle diameter of about 100 nm to 300 nm which are formed from a polymer having a carboxy group descrbed in the section of the (a) polymer particles above.

### (Reactive compound having epoxy group)

Examples of the (b) reactive compound having an epoxy group include a low-molecular weight compound having a number average molecular weight of less than 500 and a polymer compound having a number average molecular weight of 500 or more. Preferable examples of the low-molecular weight compound having a number average molecular weight of less than 500 include trimethylol propane triglycidyl ether. Examples of commercially available products include DENACOL EX-145 (trade name, manufactured by Nagase ChemteX Corporation) and DENACOL EX-313 (trade name, manufactured by Nagase ChemteX Corporation). Examples of the polymer compound having a number average weight molecular weight of 500 or more include DENACOL EX-861 (trade name, manufactured by Nagase ChemteX Corporation) as a commercially available product. When the (b) reactive compound is in the form of polymer particles having an epoxy group, particles having an average particle diameter of about 100 nm to 300 nm which are formed from a polymer having an epoxy group described in the section of the (a) polymer particles above are preferable.

### (Reactive compound having amino group)

Examples of the (b) reactive compound having an amino group include a low-molecular weight compound having a number average molecular weight of less than 500 and a polymer compound having a number average molecular weight of 500 or more. Examples of the low-molecular weight compound having a number average molecular weight of less than 500 include ethanolamine, diethanolamine, triethanolamine, N-methyl diethanolamine, N-ethyl diethanolamine, morpholine, N-ethyl morpholine, ethylenediamine, diethylenetriamine, triethylenetetramine, polyethyleneimine, tetramethylpropylenediamine, N-(β-aminoethyl)isopropanol amine, triethylenetetramine, tetraethylenepentamine, pentaethylene hexamine, p-phenylene diamine, and pyridine-2,3,6-triamine. Examples of the polymer compound having a number average molecular weight of 500 or more include, as a commercially available product, EPICLON B-065 (trade name, manufactured by DIC corporation) and a salt thereof. When the (b) reactive compound is in a form of polymer particles having an amino group, particles having an average particle diameter of about 100 nm to 300 nm which are formed from a polymer such as a polymer or copolymer including a repeating unit derived from a low-molecular weight compound are preferable.

### (Reactive compound having halomethyl group)

Further, examples of the (b) reactive compound having a halomethyl group include 1,3-dibromo-2-propanol (molecular weight: 217.89).

### (Reactive compound having acetoacetoxy group)

Examples of the (b) reactive compound having an acetoacetoxy group include dimethyl 1,3-acetone dicarboxylate, diethyl 1,3-acetone dicarboxylate, dimethyl 1,4-cyclohexanedione-2,5-dicarboxylate, 2-ethyl-2-acetylbutyric acid ethyl ester, ethyl 2-amylacetoacetate, 2-ethyl-2-methylacetoacetic acid ethyl ester, and ethyl 2-oxocyclohexane carboxylate.

As the (b) reactive compound, a polymer, which is obtained by polymerizing a repeating unit having the reactive functional group included in the (a) polymer compound, dissolved or dispersed in an arbitrary ink solvent may be used.

### <Energy application>

As described above, the reactive functional group included in the (a) polymer particles and the functional group included in the (b) reactive compound used for the ink composition according to the invention react with each other by energy application. When an amount of the solvent is reduced in the ink composition by, for example, drying at room temperature or drying at reduced pressure, the reactive functional group of the (a) polymer particles and the functional group of the (b) reactive compound do not react with each other.

As used herein, the term "energy application" means energy application performed after applying an ink onto a recording medium. Only after performing energy application, the reaction between the reactive functional group of the (a) polymer particles and the functional group of the (b) reactive compound proceeds. The energy application used is preferably heating or irradiation of active radiation ray (light irradiation). Heating is more preferable.

An energy application process may be performed simultaneously with drying of an ink image after applying of ink onto a recording medium, or may be performed after a drying process of drying an ink image on a recording medium.

When the energy application is performed by heating, the heating temperature is preferably in a range of from 50°C to 110°C, and more preferably in a range of from 50°C to 90°C.

The heating time is preferably from 0.1 seconds to 3 minutes, and more preferably from 0.1 seconds to 90 seconds.

When the heating temperature is within the aforementioned range, the reaction can be performed efficiently without deteriorating a recording medium, thereby forming an ink image having excellent rub-off resistance and blocking resistance.

When the energy application is performed by irradiation of active radiation ray, an ultraviolet ray (hereinafter, may also be referred to as "UV light"), a visible ray, an electron beam, and the like may be used, but irradiation of UV light is preferably used.

Although the peak wavelength of UV light depends on the absorption property of a sensitizing pigment which is optionally used, the peak wavelength of UV light is, for example, preferably from 200 nm to 405 nm, more preferably from 220 nm to 390 nm, and further more preferably from 220 nm to 350 nm. In the invention, when a sensitizing pigment or a photopolymerization initiator is not used, the peak wavelength of UV light is preferably from 200 nm to 310 nm, and more preferably from 200 nm to 280 nm.

When UV light is used, it is suitable to apply UV light at an illuminance at the exposure surface of, for example, from 10 mW/cm² to 2,000 mW/cm², and preferably from 20 mW/cm² to 1,000 mW/cm².

As a UV light source, a mercury lamp, a gas laser, a solid laser, or the like is mainly used, and a mercury lamp, a metal halide lamp, and a UV fluorescent lamp are widely known. When a sensitizing pigment or a photopolymerization initiator is further used as an optional component in the ink composition according to the invention, a metal halide lamp, a high pressure mercury lamp, a medium pressure mercury lamp, a low pressure mercury lamp, and UV-LED are preferable. When a sensitizing pigment or a photopolymerization initiator is not further used, a medium pressure mercury lamp and a low pressure mercury lamp are preferable.

In the process of energy application by light irradiation, it is suitable that irradiation time of UV light is, for example, from 0.01 seconds to 120 seconds, and preferably from 0.1 seconds to 90 seconds.

### <(c) Coloring agent>

The ink composition according to the invention includes (c) a coloring agent. By including a coloring agent, the ink composition according to the invention becomes a colored ink composition.

Examples of the coloring agent include a dye and a pigment. From the viewpoint of durability (for example, heat resistance, light resistance, and water resistance,) of an ink image to be formed, the coloring agent is preferably a pigment.

When a pigment is used as a coloring agent, the pigment may be included in the form of a pigment dispersion in the ink composition. Examples of the pigment dispersion that can be used include a dispersion in which a pigment is dispersed by a pigment dispersion agent; and a self-dispersible pigment.

### (Pigment)

The pigment that may be included in the pigment dispersion for the ink composition may be, for example, a commonly used organic pigment and inorganic pigment and resin particles dyed with dye. In general, any commercially available pigments can be used, and a pigment pre-treated with a commercially available pigment dispersion body or a surface treating agent (for example, a pigment dispersed in an insoluble resin or the like as a dispersion medium or a pigment surface-grafted with a resin) may also be used, as long as the effect of the invention is not impaired.

Examples of the pigment include pigments such as those described in "Ganryo no Jiten (Dictionary of Pigments)" (2000) edited by Seijiro Itoh,"Industrial Organic Pigments" by W. Herbst K. Hunger, and JP-A Nos. 2002-12607, 2002-188025, 2003-26978, and 2003-342503.

Examples of the organic pigment and inorganic pigment that can be used in the invention include the following. Examples of the pigment exhibiting yellow color include monoazo pigments such as C. I. Pigment Yellow 1 (for example, Fast Yellow G) and C. I. Pigment Yellow 74, disazo pigments such as C. I. Pigment Yellow 12 (for example, disazo Yellow), C. I. Pigment Yellow 17, C. I. Pigment Yellow 97, C. I. Pigment Yellow 3, C. I. Pigment Yellow 16, C. I. Pigment Yellow 83, C. I. Pigment Yellow 155, and C. I. Pigment Yellow 219; azo Lake pigments such as C. I. Pigment Yellow 100 (for example, tartrazine Yellow Lake); condensed azo pigments such as C. I. Pigment Yellow 95 (for example, condensed azo Yellow), C. I. Pigment Yellow 93, C. I. Pigment Yellow 94, C. I. Pigment Yellow 128, and C. I. Pigment Yellow 166; acidic dye Lake pigments such as C. I. Pigment Yellow 115 (for example, quinoline Yellow Lake); basic dye Lake pigments such as C. I. Pigment Yellow 18 (for example, thioflavin Lake); anthraquinone pigments such as flavanthrone Yellow (Y-24); isoindolinone pigments such as isoindolinone Yellow 3RLT (Y-110); quinophthalone pigments such as quinophthalone Yellow (Y-138); isoindoline pigments such as isoindoline Yellow (Y-139); nitroso pigments such as C. I. Pigment Yellow 153 (for example, nickel nitroso Yellow); metal complex salt azomethine pigments such as C. I. Pigment Yellow 117 (for example, copper azomethine Yellow); and acetolone pigments such as C. I. Pigment Yellow 120 (benzimidazolone Yellow) C. I. Pigment Yellow 151, C. I. Pigment Yellow 175, C. I. Pigment Yellow 180, C. I. Pigment Yellow 181, and C. I. Pigment Yellow 194.

Examples of the pigment exhibiting red or magenta color include monoazo pigments such as C. I. Pigment Red 3 (for example, toluidine Red); B-naphthol pigments such as C. I. Pigment Red 1, C. I. Pigment Red 4, and C. I. Pigment Red 6; disazo pigments such as C. I. Pigment Red 38 (for example, Pyrazolone Red B); azo Lake pigments such as C. I. Pigment Red 53:1 (for example, Lake Red C), C. I. Pigment Red 57:1 (for example, Brilliant Carmin 6B), C. I. Pigment Red 52:1, and C. I. Pigment Red 48 (for example, B-oxynaphthoic acid Lake); condensed azo pigments such as C. I. Pigment Red 144 (for example, condensed azo Red), C. I. Pigment Red 166, C. I. Pigment Red 220, C. I. Pigment Red 214, C. I. Pigment Red 221, and C. I. Pigment Red 242; acidic dye Lake pigments such as C. I. Pigment Red 174 (for example, Floxin B Lake) and C. I. Pigment Red 172 (for example, Erythrosine Lake); basic dye Lake pigments such as C. I. Pigment Red 81 (for example, rhodamine 6G' Lake); anthraquinone pigments such as C. I. Pigment Red 177 (for example, dianthraquinonyl Red); thioindigo pigments such as C. I. Pigment Red 88 (for example, Thioindigo Bordeux); and perinone pigments such as C. I. Pigment Red 194 (for example, perinone Red);

perylene pigments such as C. I. Pigment Red 149 (for example, perylene scarlet), C. I. Pigment Red 179, C. I. Pigment Red 178, C. I. Pigment Red 190, C. I. Pigment Red 224, C. I. Pigment Red 123, and C. I. Pigment Red 224; quinacridone pigments such as C. I. Pigment Violet 19 (unsubstituted quinacridone), C. I. Pigment Red 122(for example, quinacridone Magenta), C. I. Pigment Red 262, C. I. Pigment Red 207, and C. I. Pigment Red 209; isoindolinone pigment such as C. I. Pigment Red 180 (for example, isoindolinone Red 2BLT); alizarin Lake pigments such as C. I. Pigment Red 83 (for example, Madder Lake); naphtholone pigments such as C. I. Pigment Red 171, C. I. Pigment Red 175, C. I. Pigment Red 176, C. I. Pigment Red 185, and C. I. Pigment Red 208; naphthol AS Lake pigments such as C. I. Pigment Red 247; naphthol AS pigments such as C. I. Pigment Red 2, C. I. Pigment Red 5, C. I. Pigment Red 21, C. I. Pigment Red 170, C. I. Pigment Red 187, C. I. Pigment Red 256, C. I. Pigment Red 268, and C. I. Pigment Red 269; and diketopyrrolo pyrrole pigments such as C. I. Pigment Red 254, C. I. Pigment Red 255, C. I. Pigment Red 264, and C. I. Pigment Red 27.

Examples of the pigment exhibiting blue or cyan color include disazo pigments such as C. I. Pigment Blue 25 (for example, dianisidine Blue); phthalocyanine pigments such as C. I. Pigment Blue 15, C. I. Pigment Blue 15:1, C. I. Pigment Blue 15:2, C. I. Pigment Blue 15:3, C. I. Pigment Blue 15:4, C. I. Pigment Blue 15:6, and C. I. Pigment Blue 16 (for example, phthalocyanine Blue); acidic dye Lake pigments such as C. I. Pigment Blue 24 (for example, Peacock Blue Lake); basic dye Lake pigments such as C. I. Pigment Blue 1 (for example, Victoria Pure Blue BO Lake); anthraquinone pigments such as C. I. Pigment Blue 60 (for example, Indanthrone Blue); and alkali Blue pigments such as C. I. Pigment Blue 18 (Alkali Blue V-5:1).

Examples of the pigment exhibiting green color include phthalocyanine pigments such as C. I. Pigment Green 7 (phthalocyanine Green) and C. I. Pigment Green 36 (phthalocyanine Green); and azo metal complex pigments such as C. I. Pigment Green 8 (Nitroso Green) and C. I. Pigment Green 10.

Examples of the pigment exhibiting orange color include isoindoline pigments such as C. I. Pigment Orange 66 (isoindoline Orange), anthraquinone pigments such as C. I. Pigment Orange 51 (dichloropyranthrone Orange); B-naphthol pigments such as C. I. Pigment Orange 2, C. I. Pigment Orange 3, and C. I. Pigment Orange 5; naphthol AS pigments such as C. I. Pigment Orange 4, C. I. Pigment Orange 22, C. I. Pigment Orange 24, C. I. Pigment Orange 38, and C. I. Pigment Orange 74; isoindolinone pigments such as C. I. Pigment Orange 61; perinone pigments such as C. I. Pigment Orange 43; disazo pigments such as C. I. Pigment Orange 15 and C. I. Pigment Orange 16; quinacridone pigments such as C. I. Pigment Orange 48 and C. I. Pigment Orange 49; acetolone pigments such as C. I. Pigment Orange 36, C. I. Pigment Orange 62, C. I. Pigment Orange 60, C. I. Pigment Orange 64, and C. I. Pigment Orange 72; and pyrazolone pigments such as C. I. Pigment Orange 13 and C. I. Pigment Orange 34.

Examples of the pigment exhibiting brown color include naphtholone pigments such as C. I. Pigment Brown 25 and C. I. Pigment Brown 32.

Examples of the pigment exhibiting black color include carbon black, titanium black, indazine pigments such as C. I. Pigment black 1 (Aniline black); and perylene pigments such as C. I. Pigment black 31 and C. I. Pigment black 32.

Examples of the pigment exhibiting white color include basic lead carbonate (2PbCO₃Pb(OH)₂, so-called silver white), zinc oxide (ZnO, so-called zinc white), titanium oxide (TiO₂, so-called titanium white), and strontium titanate (SrTiO₃, so-called titanium strontium white). The inorganic particles used as the white pigment may be composed of a single element component; or may be complex particles of an oxide or an organometallic compound of silicon, aluminum, zirconium, or titanium with an organic compound.

Since titanium oxide has a lower density and a higher refractive index than other white pigments, titanium oxide is more chemically- or physically- stable, and thus, has a greater masking and coloring potentials as a pigment, and is excellent in resistance to acid or alkali and other environmental factors. Thus, the use of titanium oxide as the white pigment is preferable. Other white pigments (including white pigments other than those described above) may optionally be used.

With respect to the pigments other than the white pigment, as the average particle diameter of the pigment is smaller, the color developing property becomes more excellent. Therefore, when a pigment dispersion according to the invention is applied to a pigment dispersion having a color other than white, the average particle diameter of the pigments included in the pigment dispersion is preferably in a range of from about 0.01 µm to 0.4 µm, and more preferably in a range of from 0.02 µm to 0.3 µm. It is more preferable that the maximum particle diameter of the pigment is 3 µm or less, and preferably 1 µm or less. The particle diameter of the pigment can be adjusted by selection of a pigment, a dispersion agent, and a dispersion medium, and adjustment of a dispersion condition and a filtering condition. Further, when the pigment dispersion according to the invention is prepared as a white pigment dispersion which can be applied to a white ink composition or the like, the average particle diameter of the pigment included in a pigment dispersion is preferably from about 0.05 µm to 1.0 µm, and more preferably from about 0.1 µm to 0.4 µm, from the viewpoint of providing favorable masking property. Even in a case in which a white pigment dispersion is prepared, the maximum particle diameter of the pigment is preferably 3 µm or less, and more preferably 1 µm or less.

### (Dispersion agent)

When a pigment is used as a coloring agent, a pigment dispersion agent may be used if necessary at a time when pigment particles are prepared. Examples of the pigment dispersion agent which may be used in the invention include an activator such as a higher fatty acid salt, an alkyl sulfate salt, an alkyl ester sulfate salt, an alkyl sulfonate salt, a sulfosuccinic acid salt, a naphthalene sulfonate salt, an alkyl phosphate salt, a polyoxyalkylene alkyl ether phosphate salt, polyoxyalkylene alkyl phenyl ether, polyoxyethylene polyoxypropylene glycol, glycerin ester, sorbitan ester, polyoxyethylene fatty acid amide, or amine oxide; and a block copolymer, a random copolymer, and a salt thereof formed from at least two types of monomers selected from the group consisting of styrene, a styrene derivative, a (meth)acrylate derivative, a vinyl naphthalene derivative, (meth)acrylic acid, a (meth)acrylic acid derivative, maleic acid, a maleic acid derivative, itaconic acid, an itaconic acid derivative, fumaric acid, and a fumaric acid derivative.

The ink composition according to the invention may further include a self-dispersible pigment. The "self-dispersible pigment" as used herein refers to a pigment capable of being dispersed without a dispersion agent, and is particularly preferably a pigment particle having a polar group on a surface thereof.

A pigment particle having a polar group on a surface thereof (hereinafter, also referred to as "pigment derivative") as used herein refers to a pigment in which a surface of a pigment particle is directly modified with a polar group, or an organic compound having an organic pigment parent nucleus in which a polar group is directly bonded thereto or bonded thereto through a joint.

Examples of the polar group include a sulfonic acid group, a carboxylic acid group, a phosphoric acid group, a boric acid group, and a hydroxyl group, and a sulfonic acid group and a carboxylic acid group are preferable, and a sulfonic acid group is more preferable.

Examples of methods for obtaining pigment particles having a polar group on a surface thereof include a method of introducing, to at least a part of a surface of the pigment, a polar group such as a sulfonic acid group or a salt thereof by oxidizing the surface of pigment particles with an appropriate oxidizing agent described in WO97/48769, JP-A Nos. 10-110129, 11-246807, 11-57458, 11-189739, 11-323232, and 2000-265094. Specifically, in a case carbon black oxidized with concentrated nitric acid or a color pigment, pigment particles having a polar group can be produced by oxidation with sulfamic acid, sulfonyl pyridine salt, or sulfuric acid amide in sulfolane or N-methyl-2-pyrrolidone. When pigment particles having a polar group is oxidized to an excess level by the reactions, thereby being water-soluble, the polar group introduced is removed and the pigment particles is purified to give a pigment dispersion. Further, when a sulfonic acid group is introduced to a surface by oxidation, the acidic group may be neutralized using a basic compound, if necessary.

Other examples of the method for obtaining pigment particles having a polar group on a surface thereof include a method of adsorbing, to pigment particle surface, a pigment derivative disclosed in JP-A Nos. 11-49974, 2000-273383, and 2000-303014 by a treatment such as milling; and a method of dissolving, in a solvent with a pigment derivative, a pigment disclosed in JP-A Nos. 2000-377068, 2001-1495, and 2001-234966 and then crystallizing the mixture in a poor solvent. Pigment particles having a polar group on a surface thereof can be easily obtained according to either method.

A polar group present at a pigment surface may be a free group or may be in a form of a salt, or may have a counter salt. Examples of the counter salt include an inorganic salt (for example, a salt of lithium, sodium, potassium, magnesium, calcium, aluminum, nickel, or ammonium) and an organic salt (for example, a salt of triethylammonium, diethylammonium, pyridinium, or triethanol ammonium), and a monovalent counter salt is preferable.

A content of the coloring agent in the ink composition is appropriately selected depending on the purpose of use of the ink composition within a range that the curability of the ink is not impaired.

The pigment used in the invention is included preferably within a range of from 0.1% by mass to 15% by mass, and particularly preferably within a range of from 0.5% by mass to 9% by mass, with respect to a total amount of the ink composition. When the pigment is included within the range, an image saturation is favorable, and a robust coating film can be formed as the cross-linking reaction is not inhibited.

### <(d) Water-soluble organic solvent>

The ink composition according to the invention includes a water-soluble organic solvent. In the present invention, the water-soluble organic solvent refers to an organic solvent having a solubility of 10% by mass or more in water at 25°C.

The ink composition according to the invention may include an aqueous medium and may include at least water as an aqueous medium. When the ink composition includes at least one kind of the (d) water-soluble organic solvent, the water-soluble organic solvent in the ink composition functions as a solvent or a dispersion medium together with water that may be used in combination. Further, a water-soluble organic solvent having a function of, for example, an anti-drying agent, a penetration accelerating agent, and a viscosity adjusting agent may be additionally used. The water-soluble organic solvent according to the invention may be a water-soluble organic solvent having two or more of the aforementioned functions.

The ink composition according to the invention is applied to an image recording method by an inkjet system. Since the water-soluble organic solvent functions as an anti-drying agent, by using the water-soluble organic solvent, occurence of nozzle clogging at an ink ejection port due to drying of the ink can effectively be prevented.

The water-soluble organic solvent functioning as an anti-drying agent is preferably a water-soluble organic solvent having a vapor pressure lower than that of water. Specific examples thereof include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylol propane; lower alkyl ethers of polyhydric alcohol such as ethylene glycol monomethyl (or ethyl) ether and diethylene glycol monomethyl (or ethyl) ether and triethylene glycol monoethyl (or butyl) ether; heterocycles such as 2-pyrrolidone, N-methyl-2-pyrrolidone, 1,3-dimethyl-2-imidazolidinone, and N-ethyl morpholine; sulfur-containing compounds such as sulfolane, dimethyl sulfoxide, and 3-sulfolene; polyfunctional compounds such as diacetone alcohol, and diethanolamine; and urea derivatives.

Among them, polyhydric alcohols such as glycerin and diethylene glycol are preferred from the viewpoint of an excellent anti-drying property.

Among water-soluble organic solvents, there is a solvent which functions as a penetration accelerating agent. When the water-soluble organic solvent having penetration accelerating property is used, penetration of the ink composition into a recording medium (printing paper) is improved. Specific examples of the water-soluble organic solvent that may be preferably used having excellent penetration accelerating property include alcohols such as ethanol, isopropanol, butanol, di(tri)ethylene glycol monobutyl ether, and 1,2-hexane diol; sodium lauryl sulfate; sodium oleate; and a non-ionic surfactant.

When the water-soluble organic solvent having penetration accelerating property is used in the ink composition according to the invention, it is noted that an addition amount of the water-soluble organic solvent having penetration accelerating property used is preferably within a range such that bleeding of the printing and print-through do not occur.

Examples of the water soluble organic solvent that may be used in the invention include, in addition to the solvent having the aforementioned functions, a solvent used for adjusting the viscosity of the ink composition. Specific examples of the water-soluble organic solvent that may be used for adjusting the viscosity of the ink composition include alcohols (for example, methanol, ethanol, propanol, isopropanol, butanol, isobutanol, sec-butanol, t-butanol, pentanol, hexanol, cyclohexanol, and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexane diol, pentane diol, glycerin, hexane triol, and thiodiglycol), glycol derivatives (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, and ethylene glycol monophenyl ether), amines (for example, ethanolamine, diethanolamine, triethanolamine, N-methyl diethanolamine, N-ethyl diethanolamine, morpholine, N-ethyl morpholine, ethylene diamine, diethylene triamine, triethylene tetramine, polyethylene imine, and tetramethylpropylene diamine), and other polar solvents (for example, formamide, N,N-dimethyl formamide, N,N-dimethyl acetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone).

Not only is the water-soluble organic solvent used as a solvent or a dispersion medium, but also the water-soluble organic solvent may be selected and used for the purpose of exhibiting various functions as described above.

The water-soluble organic solvent used in the ink composition according to the invention may be used singly or in combination of two or more types thereof, depending on the purpose.

A content of the water-soluble organic solvent in the ink composition according to the invention is preferably from 1% by mass to 70% by mass, more preferably from 2% by mass to 60% by mass, and particularly preferably from 5% by mass to 50% by mass, with respect to the ink composition, from the viewpoints of liquid physical properties such as preventing drying, a penetration property into a subject, and a viscosity. When the content of the water-soluble organic solvent is within the aforementioned range, liquid physical properties such as drying speed of the ink composition, penetration property into a subject, and viscosity can be adjusted in a favorable state.

The ink composition according to the invention may also include water as a medium. A content ratio of water in the ink composition is appropriately selected depending on the purpose, but, generally, is preferably from 10% by mass to 95% by mass, and more preferably from 30% by mass to 90% by mass, with respect to the ink composition.

The ink composition according to the invention may include various additives used for an ink composition depending on the purpose within a range such that the effect of the invention is not impaired, in addition to the components (a) to (d) described above,.

### (Surfactant)

The ink composition according to the invention may additionally include a surfactant. Examples of the surfactant that is preferably used include an anionic surfactant such as a dialkyl sulfosuccinate, an alkyl naphthalene sulfonate, or a fatty acid salt; a non-ionic surfactant such as a polyoxyethylene alkyl ether, a polyoxyethylene alkyl allyl ether, an acetylene glycol, or a polyoxyethylene-polyoxypropylene block copolymer; and a cationic surfactant such as an alkyl amine salt or a quaternary ammonium salt. Among these, the anionic surfactant and the non-ionic surfactant are particularly preferably used.

### (Other additives)

In addition to the above-mentioned respective components, depending on the purpose of improving properties such as ejection stability, compatibility with a print head or ink cartridge, storage stability, image preserbability, or the like, other various known additives, for example, a viscosity adjusting agent, a surface tension adjusting agent, a specific resistance adjusting agent, a film-forming agent, a dispersion agent, a surfactant, an ultraviolet absorber, an antioxidant, an anti-discoloration agent, a fungicide, a corrosion preventing agent, a solid humectant, silica fine particles, and the like, may be appropriately selected and used in the ink composition according to the invention, if necessary.

Examples of additives that may be used include oil droplet particles such as liquid paraffin, dioctyl phthalate, tricresyl phosphate, and silicone oil, an ultraviolet absorber as disclosed in JP-A Nos. 57-74193, 57-87988, and 62-261476, an anti-decoloration agent as disclosed in JP-A Nos. 57-74192, 57-87989, 60-72785, 61-146591, 1-95091, and 3-13376, a fluorescent whitening agent as disclosed in JP-A Nos. 59-42993, 59-52689, 62-280069, 61-242871, and 4-219266, and a pH adjusting agent such as sulfuric acid, phosphoric acid, citric acid, sodium hydroxide, potassium hydroxide, or potassium carbonate.

### <Method of producing ink composition>

A method of producing the ink composition according to the invention is not particularly limited, and the ink composition may be prepared by stirring, mixing, and dispersing respective components using a container-driven medium mill such as a ball mill, a centrifugal mill, or a planetary balls mill; a high-speed rotary mill such as a sand mill; a medium agitating mill such as a mixing vessel-type mill; or a simple dispersion apparatus such as a disper. The order of addition of respective components is arbitrary. Preferably, a pigment as a coloring agent, a polymer dispersion agent, and a water-soluble organic solvent are pre-mixed and subjected to a dispersion treatment, and the obtained dispersion is mixed with polymer particles and an organic solvent. In this case, at the time of addition or after addition, the components are uniformly mixed using a simple stirring apparatus such as a three-one motor, a magnetic stirrer, a disper, and a homogenizer. Alternatively, a mixing apparatus such as a line mixer may be used for mixing. In order to further decrease a size of the pigment particles, a dispersion apparatus such as a bead mill or a high-pressure jet mill may be used for mixing. Depending on the type of pigment or polymer dispersion agent, the polymer particles may be added at the time of pre-mixing which is carried out before the pigment dispersing treatment.

The ink composition according to the invention preferably has a surface tension at 25°C of from 20 mN/m to 40 mN/m. The surface tension is measured under conditions of 25°C using an automatic surface tensiometer CBVP-Z (trade name, manufactured by Kyowa Interface Science Co., Ltd.). The viscosity is preferably from 1 mPa·s to 40 mPa·s, and more preferably from 3 mPa·s to 30 mPa·s. The viscosity of ink composition is measured under conditions of 25°C using a viscometer TV-22 (trade name, manufactured by Toki Sangyo Co., Ltd.).

### <Image forming method>

The image forming method according to the invention includes an ink application process of applying the ink composition onto a recording medium and an energy application process of applying energy to the ink composition that has been applied onto the recording medium. By carrying out these processes, an image having favorable rub-off resistance and blocking resistance is formed from the ink composition on the recording medium.

The energy application process is preferably a process of heating the ink composition that has been applied onto the recording medium. The image forming method may further include a solvent removal process of removing a water-soluble solvent and other medium optionally used, which are included in the ink composition that has been applied onto the recording medium, either simultaneously with or before the energy application process. The solvent removal process is a process of reducing the content of a solvent in liquid phase or dispersion medium including the water-soluble solvent, which is included in the ink composition, and does not mean complete removal of the solvent by the solvent removing process.

### (Ink application process)

Here, the ink application process in the image forming method according to the invention is described. In the invention, the ink application process is not restricted as long as it has a process of applying the ink composition onto the recording medium.

An inkjet recording apparatus used in the image forming method according to the invention is not particularly limited, and may be arbitrarily selected from known inkjet recording apparatuses capable of providing an intended resolution, and used. In other words, any one of known inkjet recording apparatuses including commercially available products can perform ejection of the ink composition to the recording medium in the image forming method according to the invention.

Examples of inkjet recording apparatuses which may be used in the invention include an apparatus having an ink supplying system, a temperature sensor, and a heating device.

The ink supplying system includes a main tank including the ink composition according to the invention, a supply pipe, an ink supplying tank immediately before an inkjet head, a filter, and a piezo-type inkjet head. The piezo-type inkjet head can be driven such that preferably from 1 pl to 100 pl and more preferably from 8 pl to 30 pl of multiple-size dots at a resolution of preferably from 320 × 320 dpi to 4,000 × 4,000 dpi (dot per inch), more preferably from 400 × 400 dpi to 1,600 × 1,600 dpi, and still more preferably from 720 × 720 dpi are ejected. In the invention, the term dpi (dot per inch) represents the number of dots per inch (2.54 cm).

Since the ink composition according to the invention to be ejected is preferably kept at a constant temperature, it is preferable that the inkjet recording apparatus has a temperature stabilizing unit that stabilizes the temperature of the ink composition. Intended parts at which the temperature is kept constant are a pipe system including a part from the ink tank (and an intermediate tank, if present) to a nozzle ejection surface and all members of the inkjet recording apparatus. In other words, a part from the ink supplying tank to the inkjet head may be thermally insulated and heated.

Although the method of adjusting temperature is not particularly limited, for example, it is preferable to place a temperature sensor at plural positions on respective pipes so that the heating is adjusted depending on the flow rate of ink composition and environment temperature. The temperature sensor may be placed at a position near the ink supplying tank and the nozzle of an inkjet head. Furthermore, preferably,k the head unit to be heated is thermally shielded or insulated such that the apparatus itself is not affected by the outside temperature. In order to reduce the printer start-up time required for heating, or to reduce the loss in thermal energy, it is preferable to reduce the thermal capacity of the entire heating unit, simultaneously while performing thermal insulation from other parts.

When the above-mentioned inkjet recording apparatus is used, the ejection of the ink composition is preferably carried out after the viscosity of the ink composition is reduced to preferably from 3 mPa·s to 15 mPa·s, and more preferably from 3 mPa·s to 13 mPa·s, by heating the ink composition to preferably 25°C to 80°C, and more preferably 25°C to 50°C. In particular, when the ink composition according to the invention having an ink viscosity of 50 mPa·s or less at 25°C is used, ink ejection can be favorably carried out, thus it is preferable. By using this method, an excellent ejection stability is achieved.

The temperature of the ink composition at the time of ejection is preferably maintained at a constant temperature. Accordingly, it is favorable to adjust the temperature of the ink composition preferably within a range of ±5°C of a set temperature, more preferably within a range of ±2°C of a set temperature, and most preferably within a range of ±1°C of a set temperature.

In the invention, the recording medium is not particularly limited, and a known recording medium as a support or a recording material may be used. Examples of the recording medium include paper, paper laminated with plastic (for example, polyethylene, polypropylene, or polystyrene), a metal plate (for example, aluminum, zinc, or copper), a plastic film (for example, a polyvinyl chloride resin, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, or polyvinyl acetal), and a paper sheet or plastic film having the metal mentioned above laminated or deposited thereon. Of these, paper or paper laminated with plastic is preferable.

### (Energy application process)

Hereinafter, the energy application process in the image forming method according to the invention is explained. The energy application process in the invention is not specifically limited as long as it is a process of applying energy to the ink composition that has been applied onto a recording medium so that the reactive functional group of the (a) polymer particles reacts with the functional group of the (b) reactive compound. Examples thereof include a heating process and an active radiation ray irradiation process. Among them, from the viewpoint of reactivity and ease of the treatment, a heating process is preferably carried out.

The heating temperature for the heating process is appropriately selected within a range such that the reaction between the reactive functional group of the (a) polymer particles and the functional group of the (b) reactive compound proceeds and the components included in the recording medium or ink are not negatively affected. Specifically, as described above, the heating temperature is preferably within a range of from 50°C to 110°C, and more preferably within a range of from 50°C to 90°C. Further, heating time is selected according to the condition in which the reaction between the reactive functional group and the functional group proceeds. In general, the heating is preferably carried out for 0.1 seconds to 3 minutes, and more preferably for 0.1 seconds to 90 seconds.

The heating unit is not particularly limited, and may be a non-contact heating unit such as a method of conveyance through a heating zone maintained at pre-determined temperature by a heating unit such as hot air, infrared irradiation, or heater; or may be a contact heating unit of contacting, with a heat roll having a heater, the back side of a recording medium that has been applied with ink. Among them, from the viewpoint of production stability, a heating method using hot air is preferable.

When the energy application is performed by irradiation of active radiation ray, examples of the active radiation ray which may be used in the irradiation include an ultraviolet ray (hereinafter, may also be referred to as "UV light"), a visible ray, and an electron beam, and UV light irradiation is preferred.

As the condition for UV light irradiation, UV light is applied at an illuminance at the exposure surface of a range preferably from 10 mW/cm² to 2,000 mW/cm², and more preferably from 20 mW/cm² to 1,000 mW/cm².

As a UV light source, a known source can be suitably used. Examples thereof include a mercury lamp, a gas laser, and a solid laser.

For the UV light irradiation, irradiation time is preferably 0.01 seconds to 120 seconds, and more preferably for 0.1 seconds to 90 seconds.

By applying energy to the ink composition according to the invention, in the ink composition, the reactive functional group of the (a) polymer particles reacts with the functional group of the (b) reactive compound to form a cross-linked structure in an ink image, thereby improving the fixation property and strength of the image. As a result, it becomes possible to improve rub-off resistance, blocking resistance, and the like. Further, by selecting a combination of the functional group and the reactive functional group which cause a reaction that is not mediated by a radical, as the functional group of the (b) reactive compound and the reactive functional group of the (a) polymer particles, respectively, an advantage in which there is no concern that a cross-linking reaction is not inhibited by oxygen can also be obtained.

Further, before the energy application process or simultaneously with the energy application process, a drying process of reducing the solvent in an ink image may be also carried out.

That is, the energy application simultaneously with the ink image drying process may be performed after ink is applied onto a recording medium. Alternatively, the energy application process may be performed after the drying process of reducing the content of the solvent in an ink image on a recording medium is performed first. The drying process that is performed before the energy application process is carried out within a temperature range such that the reaction between the reactive functional group and the functional group does not proceed. For example, examples include a method such as drying under reduced pressure at room temperature and a blow air drying by blowing air at 10°C to 40°C.

The ink image formed by the image forming method according to the invention using the ink composition according to the invention has improved image strength due to formation of a cross-linked structure,whereby the ink image has excellent rub-off resistance and blocking resistance. Further, the reaction does not proceed when the energy application is not performed. For such reasons, even in a case in which the ink composition adhered to an ejection nozzle of an inkjet device and fixed thereon with the lapse of time, the fixed substance is easily re-dissolved or re-dispersed when contacting excess amount of solvent at the time of ejection of the ink composition again, and therefore the ink composition according to the invention has excellent ejection recovery.

### EXAMPLES

Hereinafter, the invention is described in greater detail using these examples. It should be noted that the units "part" and "%" are in terms of mass unless specifically described otherwise.

### <Synthesis Example 1: Synthesis of the polymer particles (a-1)>

To a reaction vessel, 120 ml of pure water was added and heated to 90°C. An initiator solution including 0.03 g of potassium persulfate dissolved in 3 ml of water was added to the vessel and stirred.

A monomer emulsion including 5 g of glycidyl methacrylate, 45 g of M-90G (trade name), 0.25 g of isooctyl thioglycolate chain transfer agent, 1.2 g of 30% RHODAFAC RS710 (trade name), and 20 ml of pure water was prepared. The resulting emulsion was added dropwise to the reaction vessel over 30 min. Simultaneously, an initiator solution including 0.11 g of potassium persulfate dissolved in 12 ml of water was added dropwise to the reaction vessel over the same time period.

The reactants were maintained at 90°C and stirred for 3 hours. Subsequently, the reactants were cooled to 50°C. After adding 50% by mass aqueous solution of potassium hydroxide, the formed latex solution was adjusted to pH 8.5.

After cooling to room temperature (25°C), the resulting latex solution was filtered with a 200-mesh filter to obtain a dispersion liquid of the polymer particles (a-1) having a solid content of 15.4%. The resulting polymer particles are particles having an epoxy group derived from glycidyl methacrylate as a raw material monomer.

Particle diameter of the resulting polymer particles (a-1) was measured by MICROTRAC UPA EX-150 (trade name) according to the condition described above. As a result, the average particle diameter was found to be 205 nm.

### <Synthesis Example 2: Synthesis of polymer particles (a-8)>

A latex solution was obtained in the same manner as in Synthesis Example 1 except that the monomer composition is changed to 75% by mass of 2-hydroxyethyl methacrylate (HEMA), 15% by mass of 4-chloromethylstyrene (CMS-P), and 10% by mass of methacrylic acid (MAA). By adding 0.1 N aqueous hydrogen chloride solution to the latex solution, the solution was adjusted to be acidic (pH 2.5). The latex solution adjusted to be acidic was reacted for 12 hours at 60°C followed by ultra filtration. Then pH was adjusted to 8.5 by addition of 50% aqueous solution of potassium hydroxide,. After cooling to room temperature (25°C), the resulting latex solution was filtered with a 200-mesh filter to obtain a dispersion liquid of the polymer particles (a-8) having a phenolic hydroxyl group and having a solid content of 16.2%.

Particle diameter of the resulting polymer particles (a-8) was measured in the same manner as in the polymer particles (a-1). As a result, the average particle diameter was found to be 220 nm.

### <Preparation of Pigment Dispersion>

### (Synthesis of polymer dispersion agent E-1)

To a 500 ml three-neck flask equipped with a stirrer and a condenser, 44 g of methyl ethyl ketone was added, and then heated to 72°C under a nitrogen atmosphere. To the flask, a solution in which 0.43 g of dimethyl-2,2'-azobisisobutyrate, 30 g of benzyl methacrylate, 5 g of methacrylic acid, and 15 g of methyl methacrylate were dissolved in 25 g of methyl ethyl ketone, was added dropwise over 3 hours. After completion of the dropwise addition, the content in the flask was allowed to react for one additional hour, and then a solution in which 0.21 g of dimethyl-2,2'-azobisisobutyrate was dissolved in 1 g of methyl ethyl ketone was added thereto. The temperature of the mixture was raised to 78°C, and the mixture was heated for 4 hours. The resulting reaction solution was subjected to re-precipitation twice using an excess amount of hexane, and the precipitated resin was dried, thereby obtaining 43 g of polymer dispersion agent E-1.

The composition of the obtained resin was confirmed by ¹H-NMR, and the weight average molecular weight (Mw) of the resin as determined by GPC was 42,000. Further, the acid number as determined by the method described in the JIS Standard (JIS K 0070: 1992) was 65.4 mgKOH/g.

### (Preparation of dispersion of resin-coated cyan pigment)

10 parts of Pigment Blue 15:3 (PHTHALOCYANINE BLUE A220, manufactured by Dainichi Seika Color & Chemicals Mfg. Co., Ltd.), 5 parts of the polymer dispersion agent E-1 as obtained above, 42 parts of methyl ethyl ketone, 5.5 parts of 1 mol/L NaOH solution, and 87.2 parts of ion exchange water were mixed and dispersed for 2 to 6 hours by a bead mill using zirconia beads having a diameter of 0.1 mm φ.

Methyl ethyl ketone was removed from the obtained dispersion at 55°C under reduced pressure, and part of the water was further removed, thereby obtaining a dispersion of resin-coated Pigment Blue 15:3 which has a pigment concentration of 10.2% by mass (hereinafter, described as the "PB 15:3 dispersion").

### <Preparation of Ink Composition>

### (Example 1)

### (Composition 1)

| | |
|---|---|
| (a) Polymer particles (a-1) obtained in Synthesis Example 1 | 5% |
| (b) Reactive compound (b-1) below | 2% |
| PB 15:3 dispersion obtained above [(c) Coloring agent] | 3% |
| 2-Pyrrolidone [(d) Water-soluble organic solvent] | 20% |
| 2-Methyl-1,3-propanediol [(d) Water-soluble organic solvent] | 5% |
| ZONYL FNS (trade name, manufactured by Du Pont, a fluorine-basedsurfactant) | 1% |
| Water | (Balance) |

The components described in Composition 1 above were mixed using a mixer (L4R, trade name, manufactured by Silverson Machines, Inc.) at 2500 revolutions/minute to prepare an ink composition. The resulting ink composition was filtered with a 200-mesh filter to obtain the ink composition of Example 1.

### (Examples 2 to 23 and Comparative Examples 1 to 3)

Ink compositions of Examples 2 to 22 and Comparative Examples 1 to 3 were obtained in the same manner as in Example 1 except that the (a) polymer particles, the (b) reactive compound, and the (d) water-soluble organic solvent used in Example 1 were changed to those described below in the Table 1. Further, detailed specifications of the (a) polymer particles, (a') a comparative polymer, the (b) reactive compound used in the example are as follows. Further, NIPPOLAN WL-530 (trade name, manufactured by NIPPON POLYURETHANE INDUSTRY CO., LTD.) used as a comparative polymer is urethane acrylic resin particles.

### (Example 24)

An ink composition was prepared in the same manner as in Example 9 except that polymer particles (a-10) were used. The polymer particles (a-10) were prepared in the same manner as in Example 9 using the same specific polymer as those forming the polymer particles (a-4) as the (a) polymer particles, except that the particle diameter was changed to 340 nm.

**[Table 1]**

| | (a) Polymer particles | | (b) Reactive compound | | (d) Water-soluble organic solvent | | | | Cross-linking method | Evaluation result of printed matter | | |
|---|---|---|---|---|---|---|---|---|---|---|---|---|
| | Abbreviation | Amount used (%) | Abbreviation | Amount used (%) | Compound | Amount used (%) | Compound | Amount used (%) | | Rub-off resistance | Blocking resistance | Recovery after standing |
| Example 1 | a-1 | 5 | b-1 | 2 | 2-Pyrrolidone | 20 | 2-Methyl-1,3-propanediol | 5 | Heating | A | A | A |
| Example 2 | a-1 | 5 | b-2 | 2 | 2-Pyrrolidone | 20 | Glycerin | 5 | Heating | A | B | A |
| Example 3 | a-1 | 5 | b-3 | 5 | 2-Pyrrolidone | 20 | 2-Methyl-1,3-propanediol | 5 | Heating | A | A | A |
| Example 4 | a-1 | 4 | b-4 | 4 | 2-Pyrrolidone | 20 | 2-Methyl-1,3-propanediol | 5 | Heating | A | A | A |
| Example 5 | a-2 | 5 | b-2 | 2 | 2-Pyrrolidone | 20 | 2-Methyl-1,3-propanediol | 5 | Heating | A | A | B |
| Example 6 | a-3 | 5 | b-2 | 2 | 2-Pyrrolidone | 20 | Glycerin | 5 | Heating | B | A | A |
| Example 7 | a-3 | 5 | b-5 | 5 | 2-Pyrrolidone | 20 | 2-Methyl-1,3-propanediol | 5 | Heating | A | A | A |
| Example 8 | a-3 | 3 | b-6 | 2 | 2-Pyrrolidone | 20 | Glycerin | 5 | Heating | A | A | A |
| Example 9 | a-4 | 3 | b-5 | 4 | 2-Pyrrolidone | 20 | Glycerin | 5 | Heating | A | A | A |
| Example 10 | a-5 | 5 | b-2 | 2 | 2-Pyrrolidone | 20 | 2-Methyl-1,3-propanediol | 5 | Heating | B | C | C |
| Example 11 | a-6 | 5 | b-1 | 2 | 2-Pyrrolidone | 20 | Glycerin | 5 | Heating | B | B | A |
| Example 12 | a-6 | 7 | b-3 | 5 | 2-Pyrrolidone | 20 | Glycerin | 5 | Heating | B | A | B |
| Example 13 | a-6 | 5 | b-4 | 4 | 2-Pyrrolidone | 20 | 2-Methyl-1,3-propanediol | 5 | Heating | B | A | B |
| Example 14 | a-6 | 5 | b-5 | 5 | 2-Pyrrolidone | 20 | Glycerin | 5 | Heating | A | B | B |
| Example 15 | a-6 | 10 | b-6 | 2 | 2-Pyrrolidone | 20 | Glycerin | 5 | Heating | A | B | B |
| Example 16 | a-6 | 5 | b-7 | 2 | 2-Pyrrolidone | 20 | 2-Methyl-1,3-propanediol | 5 | Heating | C | C | C |
| Example 17 | a-6 | 2 | b-8 | 5 | 2-Pyrrolidone | 20 | 2-Methyl-1,3-propanediol | 5 | Heating | A | B | B |
| Example 18 | a-7 | 5 | b-5 | 5 | 2-Pyrrolidone | 20 | Glycerin | 5 | Heating | B | C | B |
| Example 19 | a-7 | 5 | b-6 | 2 | 2-Pyrrolidone | 20 | Glycerin | 5 | Heating | B | C | B |
| Example 20 | a-8 | 5 | b-2 | 2 | 2-Pyrrolidone | 20 | Glycerin | 5 | Heating | B | B | B |
| Example 21 | a-9 | 5 | b-5 | 5 | 2-Pyrrolidone | 20 | Glycerin | 5 | Heating | C | B | B |
| Example 22 | a-9 | 5 | b-6 | 2 | 2-Pyrrolidone | 20 | Glycerin | 5 | Heating | C | B | B |
| Example 23 | 1 : 1 Mixture of a-3 and a-4 | 3 | b-6 | 4 | 2-Pyrrolidone | 20 | 2-Methyl-1,3-propanediol | 5 | Heating | A | A | B |
| Example 24 | a-1 | 6 | b-9 | 4 | 2-Pyrrolidone | 20 | 2-Methyl-1,3-propanediol | 5 | Heating | C | C | B |
| Example 25 | a-10 | 3 | b-5 | 4 | 2-Pyrrolidone | 20 | Glycerin | 5 | UV irradiation | C | C | C |
| Comparative Example 1 | a'-1 | 5 | None | - | 2-Pyrrolidone | 20 | 2-Methyl-1,3-propanediol | 5 | Heating | D | D | C |
| Comparative Example 2 | a'-2 | 5 | b-1 | 2 | 2-Pyrrolidone | 20 | 2-Methyl-1,3-propanediol | 5 | Heating | D | D | D |
| Comparative Example 3 | NIPPOLAN WL-530 | 5 | None | - | 2-Pyrrolidone | 20 | 2-Methyl-1,3-propanediol | 5 | Heating | B | B | D |

| Comparative polymer | Monomer foming comparative polymer (content ratio: % by mass) | | | | Mw | Reactive functional group | Particle diameter (nm) |
|---|---|---|---|---|---|---|---|
| | a | mass% | b | mass% | | | |
| a'-1 | M-90G | 70 | MMA | 30 | 45200 | None | 321 |
| a'-2 | Polyvinyl alcohol | 100 | - | - | 50600 | Hydroxyl group | (soluble in water) |

| (b) Reactive compound | Name | Reactive functional group |
|---|---|---|
| b-1 | Succinic acid | Carboxy group |
| b-2 | Tetraethylene pentamine | Amino group |
| b-3 | BuMA, MAA copolymer | Carboxy group |
| b-4 | ARON NS-1200 | Carboxy group |
| b-5 | Polymer particles (a-1) | Epoxy group |
| b-6 | Trimethylolpropane triglycidyl ether | Epoxy group |
| b-7 | 1,3-Dibromo 2-propanol | Halomethyl group |
| b-8 | Polymer particles (a-2) | Acetoacetoxy group |
| b-9 | OXT-101 | Oxetane group |

### <Formation of ink image>

### 1. Inkjet recording method for Examples 1 to 24 and Comparative Examples 1 to 3

OK TOPKOTE PLUS (trade name, manufactured by Oji Paper Co., Ltd.), as a recording medium, was fixed on a stage which moves at 500 mm/sec. Thereafter, a solid image of each of the ink compositions was printed by ejection in a line system at an ink amount per droplet of 2.4 pL and a resolution of 1,200 × 1,200 dpi using a GELJET GX5000 printer head (trade mark) manufactured by Ricoh Company Ltd., which had been set and fixed at a slanted angle (75.5 degrees) with respect to a scanning direction. Immediately after printing, the printed image was allowed to pass through an air blowing dryer that provides hot air heated at 60°C for 3 seconds, and thus a drying and cross-linking treatment was performed. Accordingly, an evaluation sample (printed matter) having an ink image formed on a recording medium was obtained.

### (Example 25)

### (Composition 2)

| | |
|---|---|
| (a) Polymer particles (a-1) obtained in Synthesis Example 1 | 6% |
| (b) Reactive compound (b-9) | 4% |
| PB 15:3 dispersion obtained above [(c) Coloring agent] | 3% |
| 2-Pyrrolidone [(d) Water-soluble organic solvent] | 20% |
| 2-Methyl-1,3-propanediol [(d) Water-soluble organic solvent] | 5% |
| ZONYL FNS (manufactured by Du Pont, a fluorine-based surfactant) | 1% |
| IRGACURE 907 (manufactured by BASF·Japan) | 3% |
| Water | (Balance) |

The components described in Composition 2 above were mixed and prepared using a mixer (L4R, trade name, manufactured by Silverson Machines, Inc.) at 2500 revolutions/minute. The resulting ink composition was filtered with a 200-mesh filter to obtain the ink composition of Example 22.

### 2. Inkjet recording method for Example 25

OK TOPKOTE PLUS (trade name, manufactured by Oji Paper Co., Ltd.) as a recording medium was fixed on a stage which moves at 500 mm/sec. Thereafter, a solid image of the ink composition was printed in a line system at an ink amount per droplet of 2.4 pL and a resolution of 1,200 × 1,200 dpi using a GELJET GX5000 printer head, trade name, manufactured by Ricoh Company Ltd., which had been set and fixed at a slanted angle (75.5 degrees) with respect to a scanning direction. Immediately after printing, the printed image was dried at 60°C for 3 seconds, and then cross-linking treatment was performed by light exposure with a light exposure amount of 2.5 J/cm² using a UV lamp (trade name, manufactured by Eye Graphics Company, Ltd., a metal halide lamp). Accordingly, an evaluation sample (printed matter) having an ink image formed on a recording medium was obtained.

### <Evaluation of ink image (printed matter)>

The printed matter (evaluation samples) of Example 1 to 25 and Comparative Examples 1 to 3 obtained above were subjected to the following evaluations. The results are summarized in Table 1 above.

### 1. Evaluation of rub-off resistance

The evaluation sample obtained above was rubbed three times, back and forth, with a weight (weight: 470 g, size: 15 mm × 30 mm × 120 mm, which corresponds to a load of 260 kg/m2) wrapped around with OK TOPKOTE PLUS (trade name, manufactured by Oji Paper Co., Ltd.). Image peeling was observed with the naked eyes and was evaluated according to the following evaluation criteria.

In a case in which no image peeling was found even after rubbing three times, back and forth, further rubbing was performed up to six times, back and forth. According to the following Evaluation Criteria, evaluation D corresponds to a level which is practically problematic.

### - Evaluation Criteria -

A: No image peeling was observed even after rubbing six times, back and forth.
B: No image peeling on the printed face of the printed matter was observed after rubbing four times, back and forth, but image peeling was observed after rubbing six times, back and forth.
C: No image peeling on the printed face of the printed matter was observed after rubbing two times, back and forth, but image peeling was observed after rubbing four times, back and forth.
D: Image peeling on the printed face of the printed matter was observed after rubbing two times, back and forth.

### 2. Evaluation of blocking resistance

One piece having a size of 3.5 cm × 4 cm was cut out from the evaluation sample obtained above, and the piece was placed on a 10 cm × 10 cm acrylic board (thickness: 7 mm) such that the printed face of the paper piece faced upward. Ten pieces of double-sided TOKUBISHI ART N (trade name, manufactured by Mitsubishi Paper Mills Ltd.) paper which had no printing on the surface and which had been cut to have the same size as the cut evaluation sample, were further superposed on the evaluation sample. A 10 cm × 10 cm acrylic board (thickness: 7 mm) was further superposed thereon, and the stacked pieces were allowed to stand in ambient conditions of 25°C and 50% RH (relative humidity) for 12 hours.

After the standing, a 1 kg weight (which corresponds to a load of 700 kg/m²) was placed on the top acrylic board, and the stacked pieces were allowed to further stand for 24 hours.

After additionally keeping the stacked pieces in ambient conditions of 25°C and 50% RH for 2 hours, the unprinted TOKUBISHI ART paper (unprinted paper) which had been superposed on the evaluation sample was removed.
At this time, the ease of separation and adhesion after peeling off were observed with the naked eye, and were evaluated according to the following evaluation criteria. According to the following Evaluation Criteria, evaluation D corresponds to a level which is practically problematic.

### - Evaluation Criteria -

A: No resistance during peeling, and adhesion of the unprinted paper was not observed.
B: There was resistance during peeling, but adhesion of the unprinted paper was not observed.
C: Adhesion of the unprinted paper on the printed face occured, and adhered unprinted paper was found under observation with a magnifying glass.
D: Adhesion of the unprinted paper on the printed face occured, and adhered unprinted paper was found by naked eye observation.

### 3. Evaluation of recovery after standing

With a GELJET GX5000 printer head (trade name) manufactured by Ricoh Company Ltd., a solid image was printed in a line system at an ink amount per droplet of 2.4 pL and a resolution of 1,200 × 1,200 dpi. After continuous printing for 10 minutes, the printer was stopped and the printer was left to stand in ambient conditions of 40°C and 25% RH for 2 weeks without applying a cap. After standing, a solid image was printed again, and the number of recovery performances required to obtain the same level of printing as before standing was determined. According to the following Evaluation Criteria, evaluation D corresponds to a level which is practically problematic.

### - Evaluation Criteria -

A: Printing equivalent to the initial printing can be obtained with 0 or 1 recovery performances.
B: Printing equivalent to the initial printing can be obtained with 2 or 3 recovery performances.
C: Printing equivalent to the initial printing can be obtained with 4 to 6 recovery performances.
D: Printing equivalent to the initial printing cannot be obtained even with 6 or more recovery performances.

As clearly indicated in the results of Table 1, the image formed using the ink composition of Examples 1 to 25 of the invention exhibits excellent rub-off resistance and blocking resistance and good recovery after standing in a case in which the ink composition is applied by an inkjet method, irrespective of whether heating or UV irradiation was applied for forming an image.

Further, comparing the results of the Examples, it was found that the (a) polymer particles having an epoxy group, a carboxy group, or an amino group exhibit further superior effects. In particular, it was found that Examples 1, 3, and 4 in which the (a) polymer particles having an epoxy group and a compound having a carboxy group as the (b) reactive compound are used, and Examples 7 and 8 in which the (a) polymer particles having a carboxy group and a compound having an epoxy group as the (b) reactive compound are used, exhibit significant effects.

Meanwhile, in Comparative Example 1 in which the polymer particles (a'-9) including no reactive functional group are used and Comparative Example 2 in which the water-soluble comparative polymer particles (a'-10) including a reactive functional group but having no particulate shape are used, rub-off resistance and blocking resistance were problematic in actual use. In Comparative Example 3 in which an ink composition including polymer particles that have a hydrazide compound is used, although rub-off resistance and blocking resistance was favorable, recovery after standing was poor.

According to the invention, an image having excellent rub-off resistance and blocking resistance is formed, and an inkjet ink composition having excellent ejection recovery is provided.

Further, according to the invention, an image forming method using the inkjet ink composition of the invention is provided in which an image having favorablerub-off resistance and blocking resistance is formed, and the solidification of ink adhered near inkjet nozzle even after time has elapsed since ink application, is reduced so that the fixed materials can be removed by simple maintenance even in a case in which the ink has been dried and solidified, thus exhibiting favorable ejection recovery,.

All publications, patent applications, and technical standards mentioned in this specification are herein incorporated by reference to the same extent as if each individual publication, patent application, or technical standard was specifically and individually indicated to be incorporated by reference.

## Claims

1. An inkjet ink composition comprising:
(a) particles of a polymer compound having at least one reactive functional group selected from the group consisting of an epoxy group and a carboxy group;
(b) a reactive compound having a functional group that reacts with the reactive functional group of the (a) particles of the polymer compound by energy application, wherein the functional group of the (b) reactive compound is different from the reactive functional group of the (a) particles of the polymer compound, and is at least one selected from the group consisting of an epoxy group and a carboxy group;
(c) a coloring agent; and
(d) a water-soluble organic solvent.

2. The inkjet ink composition according to claim 1, wherein the polymer compound has a hydrophilic group.

3. The inkjet ink composition according to claim 1 or 2, wherein the polymer compound includes a repeating unit having a hydrophilic group as a copolymerizable component, and a content ratio of the repeating unit having a hydrophilic group with respect to a total of repeating units that form the polymer compound is within a range of from 3% by mass to 50% by mass.

4. The inkjet ink composition according to any one of claims 1 to 3, wherein a number average molecular weight of the (b) reactive compound is less than 500.

5. The inkjet ink composition according to any one of claims 1 to 3, wherein a number average molecular weight of the (b) reactive compound is 500 or more.

6. The inkjet ink composition according to any one of claims 1 to 5, wherein the (b) reactive compound is water-dispersible.

7. The inkjet ink composition according to any one of claims 1 to 5, wherein the (b) reactive compound is water-soluble.

8. The inkjet ink composition according to any one of claims 1 to 7, wherein a particle diameter of the (a) particles of the polymer compound is from 100 nm to 300 nm.

9. The inkjet ink composition according to any one of claims 1 to 8, wherein the energy application is at least one selected from the group consisting of heating and active ray irradiation.

10. An image forming method comprising:
an ink application process of applying the ink composition according to any one of claims 1 to 9 onto a recording medium; and
an energy application process of applying energy to the ink composition that has been applied onto the recording medium.

11. The image forming method according to claim 10, wherein the energy application process is performed by heating the ink composition that has been applied onto the recording medium.

12. The image forming method according to claim 10 or 11, further comprising a solvent removal process of removing a solvent including a water-soluble organic solvent that is included in the ink composition that has been applied onto the recording medium, either simultaneously with the applying energy or before the applying of energy.

## Patentansprüche

1. Tintenstrahl-Tintenzusammensetzung aufweisend:
(a) Partikel einer Polymerverbindung mit mindestens einer reaktiven funktionellen Gruppe, die ausgewählt ist aus der Gruppe, die aus einer Epoxygruppe und einer Carboxygruppe besteht;
(b) eine reaktive Verbindung mit einer funktionellen Gruppe, die durch Zuführung von Energie mit der reaktiven funktionellen Gruppe der (a) Partikel der Polymerverbindung reagiert, wobei die funktionelle Gruppe der (b) reaktiven Verbindung von der reaktiven funktionellen Gruppe der (a) Partikel der Polymerverbindung verschieden ist und mindestens eine funktionelle Gruppe ist, die ausgewählt ist aus der Gruppe, die aus einer Epoxygruppe und einer Carboxygruppe besteht;
(c) ein Farbmittel; und
(d) ein wasserlösliches organisches Lösungsmittel.

2. Tintenstrahl-Tintenzusammensetzung nach Anspruch 1, wobei die Polymerverbindung eine hydrophile Gruppe hat.

3. Tintenstrahl-Tintenzusammensetzung nach Anspruch 1 oder 2, wobei die Polymerverbindung eine Struktureinheit mit einer hydrophilen Gruppe als eine copolymerisierbare Komponente enthält, und wobei der Anteil der Struktureinheit mit einer hydrophilen Gruppe an der Gesamtheit der Struktureinheiten, die die Polymerverbindung bilden, in einem Bereich von 3 Masse-% bis 50 Masse-% liegt.

4. Tintenstrahl-Tintenzusammensetzung nach einem der Ansprüche 1 bis 3, wobei ein Molekulargewicht-Zahlenmittel der (b) reaktiven Verbindung weniger als 500 ist.

5. Tintenstrahl-Tintenzusammensetzung nach einem der Ansprüche 1 bis 3, wobei ein Molekulargewicht-Zahlenmittel der (b) reaktiven Verbindung 500 oder mehr ist.

6. Tintenstrahl-Tintenzusammensetzung nach einem der Ansprüche 1 bis 5, wobei die (b) reaktive Verbindung in Wasser dispergierbar ist.

7. Tintenstrahl-Tintenzusammensetzung nach einem der Ansprüche 1 bis 5, wobei die (b) reaktive Verbindung wasserlöslich ist.

8. Tintenstrahl-Tintenzusammensetzung nach einem der Ansprüche 1 bis 7, wobei ein Partikeldurchmesser der (a) Partikel der Polymerverbindung von 100 nm bis 300 nm beträgt.

9. Tintenstrahl-Tintenzusammensetzung nach einem der Ansprüche 1 bis 8, wobei die Zuführung von Energie durch Erhitzen und/oder Bestrahlung mit wirksamer Strahlung erfolgt.

10. Bilderzeugungsverfahren aufweisend:
einen Tinten-Auftragungsvorgang des Auftragens der Tintenzusammensetzung nach einem der Ansprüche 1 bis 9 auf ein Aufzeichnungsmedium; und
einen Energie-Zuführvorgang des Zuführens von Energie zu der Tintenzusammensetzung, die auf das Aufzeichnungsmedium aufgetragen wurde.

11. Bilderzeugungsverfahren nach Anspruch 10, wobei der Energie-Zuführvorgang durch Erhitzen der Tintenzusammensetzung, die auf das Aufzeichnungsmedium aufgetragen wurde, durchgeführt wird.

12. Bilderzeugungsverfahren nach Anspruch 10 oder 11, außerdem aufweisend, entweder gleichzeitig mit der Zuführung von Energie oder vor der Zuführung von Energie, einen Lösungsmittel-Entfernungsvorgang des Entfernens eines Lösungsmittels, das ein wasserlösliches organisches Lösungsmittel enthält, das in der Tintenzusammensetzung, die auf das Aufzeichnungsmedium aufgetragen wurde, enthalten ist.

## Revendications

1. Composition d'encre pour jet d'encre, comprenant :
(a) des particules d'un composé polymère présentant au moins un groupe fonctionnel réactif sélectionné parmi le groupe consistant en un groupe époxy et un groupe carboxy ;
(b) un composé réactif présentant un groupe fonctionnel, lequel réagit avec le groupe fonctionnel réactif des particules (a) du composé polymère par l'application d'énergie, dans lequel le groupe fonctionnel du composé réactif (b) est différent du groupe fonctionnel réactif des particules (a) du composé polymère, et est au moins un élément sélectionné parmi le groupe consistant en un groupe époxy et un groupe carboxy ;
(c) un agent colorant, et
(d) un solvant organique hydrosoluble.

2. Composition d'encre pour jet d'encre selon la revendication 1, dans laquelle le composé polymère présente un groupe hydrophile.

3. Composition d'encre pour jet d'encre selon la revendication 1 ou 2, dans laquelle le composé polymère inclut un motif répété présentant un groupe hydrophile comme composant copolymérisable, et un rapport de teneur entre le motif répété présentant un groupe hydrophile et un total de motifs répétés formant le composé polymère est compris dans les limites d'une plage allant de 3 % en masse à 50 % en masse.

4. Composition d'encre pour jet d'encre selon l'une quelconque des revendications 1 à 3, dans laquelle un poids moléculaire moyen en nombre du composé réactif (b) est inférieur à 500.

5. Composition d'encre pour jet d'encre selon l'une quelconque des revendications 1 à 3, dans laquelle un poids moléculaire moyen en nombre du composé réactif (b) est supérieur ou égal à 500.

6. Composition d'encre pour jet d'encre selon l'une quelconque des revendications 1 à 5, dans laquelle le composé réactif (b) peut être dispersé dans l'eau.

7. Composition d'encre pour jet d'encre selon l'une quelconque des revendications 1 à 5, dans laquelle le composé réactif (b) est hydrosoluble.

8. Composition d'encre pour jet d'encre selon l'une quelconque des revendications 1 à 7, dans laquelle un diamètre des particules des particules (a) du composé polymère s'étend de 100 nm à 300 nm.

9. Composition d'encre pour jet d'encre selon l'une quelconque des revendications 1 à 8, dans laquelle l'application d'énergie est au moins sélectionnée parmi le groupe consistant en un chauffage et une irradiation par rayonnement actif.

10. Procédé de formation d'image, comprenant les processus suivants :
un processus d'application d'encre pour appliquer la composition d'encre selon l'une quelconque des revendications 1 à 9 sur un support d'enregistrement, et
un processus d'application d'énergie pour appliquer une énergie sur la composition d'encre ayant été appliquée sur le support d'enregistrement.

11. Procédé de formation d'image selon la revendication 10, dans lequel le processus d'application d'énergie est réalisé en chauffant la composition d'encre, laquelle a été appliquée sur le support d'enregistrement.

12. Procédé de formation d'image selon la revendication 10 ou 11, comprenant en outre un processus d'élimination de solvant pour éliminer un solvant incluant un solvant organique hydrosoluble, lequel est inclus dans la composition d'encre ayant été appliquée sur le support d'enregistrement, soit simultanément à l'application d'énergie, soit avant l'application d'énergie.
